# FASCICULE DE BREVET EUROPEEN

(11) **EP 0 862 537 B1**
(45) Date de publication et mention de la délivrance du brevet: **23.04.2003**
(21) Numéro de dépôt: 96939967.4
(22) Date de dépôt: 22.11.1996
(51) Int. Cl.: C01F 17/00, B01J 23/10

(54) **SOL ORGANIQUE COMPORTANT AU MOINS UN COMPOSE OXYGENE DE TERRE(S) RARE(S), PROCEDE DE SYNTHESE DUDIT SOL ET UTILISATION DUDIT SOL POUR LA CATALYSE**
ORGANISCHE SOL HALTENDE MINDESTENS EINE SAUERSTOFFVERBINDUNG EIN SELTENERDE, VERFAHREN FÜR DIE SYNTHESE DERSELBEN UND VERWENDUNG DERSELBEN FÜR KATALYSE
ORGANIC SOL COMPRISING AT LEAST ONE OXYGENATED RARE-EARTH COMPOUND, SYNTHESIS METHOD THEREFOR, AND USE OF SAID SOL FOR CATALYSIS

(30) Priorité: 22.11.1995 FR 9513844
(43) Date de publication de la demande: 09.09.1998
(73) Titulaire: RHODIA CHIMIE, 92408 Courbevoie Cédex (FR)
(72) Inventeur: BIRCHEM, Thierry, F-75013 Paris (FR); MACAUDIERE, Pierre, F-92600 Asnières (FR); TOURET, Olivier, F-17000 La Rochelle (FR)
(74) Mandataire: Dubruc, Philippe
(86) Numéro de dépôt international: FR9601852
(87) Numéro de publication internationale: WO97019022

(56) Documents cités:
- EP-A- 0 297 937
- EP-A- 0 671 205

## Description

La présente invention a pour objet un sol organique comportant au moins un composé oxygéné de terre(s) rare(s), un procédé de synthèse du dit sol et l'utilisation du dit sol pour la catalyse. Elle concerne plus particulièrement la synthèse de particules de composé(s) oxygéné(s) au sein d'une phase aqueuse, l'extraction des dites particules au sein d'une phase organique de manière à former un sol organique.

Les sols aqueux d'oxydes de certains métaux sont connus, mais il est déjà plus difficile de trouver la description de sols organiques. Seuls sont décrits des sols, ou solutions colloïdales, de certains métaux, quant aux sols de mélanges de métaux, si tant est qu'il soient décrits, ils ne correspondent à des mélanges de métaux que dans la mesure où il s'agit d'impureté(s) entraînée(s) par la précipitation d'un élément principal.

Par ailleurs, les sols organiques se préparent pour l'essentiel à partir de sols aqueux, mais les particules des sols aqueux se prêtent en général mal à l'extraction dans un solvant organique. Pour obtenir des sols organiques, il faut donc sélectionner les sols aqueux à partir desquels on fera les sols organiques et souvent prévoir un post-traitement en vue de les rendre extractibles.

Même la préparation des sols aqueux est souvent difficile et il convient de trouver des techniques qui permettent l'obtention de particules élémentaires présentant une bonne dispersibilité dans l'eau (le sol ne constituant qu'une sorte de dispersion).

En outre pour un grand nombre d'utilisations, ces sols doivent être stables et résister à de nombreuses variations des conditions extérieures (température agitation,...).

Ainsi les sols peuvent constituer des catalyseurs, ou des sources de catalyseurs, en phase liquide organique. Les sols de catalyseurs peuvent être utilisés pour le séchage des peintures (en général réticulation) et pour la catalyse de la combustion des carburants, et ce notamment pour la suppresion ou une forte réduction de la pollution des moteurs diesel selon la technique décrite ci-après.

L'utilisation comme additif des moteurs diesel constitue un bon exemple des contraintes auxquelles doit se plier un tel sol.

Lors de la combustion du gazole dans le moteur Diesel, les produits carbonés ont tendance à former des suies, qui sont réputées nocives tant pour l'environnement que pour la santé. Il est recherché depuis longtemps des techniques qui permettent de réduire l'émission de ces particules carbonées, qu'on désignera dans la suite de la description sous l'expression de "suies".

De très nombreuses solutions ont été proposées pour réduire ces émissions carbonées.

Toutefois, on s'oriente de plus en plus vers l'adaptation dans les circuits d'échappement d'un filtre susceptible d'arrêter la totalité, ou une très forte proportion (au moins 80 % en masse) des particules carbonées engendrées par la combustion des divers combustibles.

Cette technique est toutefois limitée par la capacité de stockage du filtre, qu'il faut soit vider, soit en brûler les suies contenues. Cette opération dite de régénération est extrêmement coûteuse à prévoir et à mettre en oeuvre. Une des solutions les plus couramment proposées est la combustion de ces suies, combustion qui est provoquée de manière intermittente soit par un chauffage électrique, soit par l'utilisation d'un combustible allumeur fossile.

Cette technique présente toutefois de nombreux inconvénients, dont le moindre n'est pas le risque de choc thermique conduisant à une fracture ou une fissuration du filtre céramique, ou une fusion du filtre métallique.

Une solution qui serait satisfaisante consiste à introduire dans les suies des catalyseurs qui permettent une auto-inflammation fréquente des suies collectées dans le filtre. Pour cela, il faut que ces suies présentent une température d'auto-inflammation suffisamment basse pour être fréquemment atteinte pendant une marche normale du moteur.

Au cours du programme de recherche qui a conduit à la présente invention, il a été prouvé que les sols organiques, notamment de cérium, pouvaient constituer un bon précurseur de catalyseur pour réduire la température d'auto-inflammation des suies.

Toutefois, pour être utilisés de manière convenable et pour répondre à des dispositions d'ordre réglementaire, il est prévu que les additifs soient introduits au fur et à mesure des besoins, à partir d'un réservoir qui doit pouvoir n'être remplacé que tous les 50 000 kilomètres.

Dans ces conditions, les additifs doivent être à la fois très concentrés et suffisamment stables pour ne point être altérés par les conditions d'agitation liées à la marche du véhicule, et par l'intervalle pluriannuel entre deux remplacements.

On connaît par EP-A-671205 un sol à base d'un métal tétravalent. Ce sol est obtenu par un procédé dans lequel on prépare un sol aqueux en mettant en oeuvre une thermohydrolyse. Ce document ne décrit pas des sols mixtes d'une terre rare et d'un autre élément métallique différent d'une terre rare.

Un but de la présente invention est de fournir un sol qui soit constitué de composés oxygénés de plusieurs métaux.

Un autre but de la présente invention est de fournir des sols organiques d'oxydes, et notamment d'oxydes de terres rares, qui soient très stables.

Cette stabilité doit s'entendre non seulement lorsque le sol est concentré, mais aussi lorsque le sol est dilué.

Un autre but de la présente invention est de fournir un sol du type précédent qui soit concentré.

Un autre but de la présente invention est de fournir un procédé de préparation de sols des types précédents.

Ces buts et d'autres qui apparaîtront par la suite sont atteints au moyen d'un procédé de préparation d'un sol organique comportant au moins un composé oxygéné métallifère à base d'au moins une terre rare et d'au moins un autre élément métallique choisi dans les groupes IVa, VIIa, VIII, Ib, IIb, IIIb et IVb de la classification périodique des éléments, caractérisé par le fait qu'il comporte les étapes suivantes:
a) préparer une phase aqueuse comportant en dispersion au moins un composé oxygéné métallifère à base d'au moins une terre rare et d'au moins un autre élément métallique choisi dans les groupes IVa, Vlla, VIII, Ib, IIb, IIIb et IVb de la classification périodique des éléments;
b) mettre en contact, simultanément ou consécutivement, une suspension issue de l'étape (a) avec une phase organique comprenant au moins un agent amphiphile et de préférence un composé ou un mélange organique jouant le rôle de solvant;
c) récupérer la phase organique;
et par le fait que ledit composé oxygéné métallifère est obtenu par un procédé comportant les étapes ci-après :
i) on prépare une solution comprenant au moins un acétate et/ou un chlorure de terre rare et un sel et/ou un sol de l'élément métallique;
ii) on met en contact la solution avec un milieu basique et on maintient le mélange réactionnel ainsi formé à un pH basique;
iii) on récupère le précipité formé par atomisation ou lyophilisation.

Sous l'expression de "terres rares" on entend les éléments dont le numéro atomique est compris entre 57 et 71 (y compris les limites) ainsi que le scandium et l'yttrium.

Par ailleurs, l'invention concerne une suspension colloïdale (ou sol) organique comportant:
- des particules de composé oxygéné métallifère à base d'au moins une terre rare et d'au moins un autre élément métallique choisi dans les groupes IVa, Vlla, VIII, Ib, llb, IIIb et IVb de la classification périodique des éléments,
- un système d'acide amphiphile,
- un diluant,
et caractérisé par le fait que les particules de composé oxygéné métallifère sont susceptibles d'être obtenues par un procédé comportant les étapes ci-après:
a) on prépare une solution comprenant au moins un acétate et/ou un chlorure de terre rare et un sel et/ou un sol de l'élément métallique;
b) on met en contact la solution avec un milieu basique et on maintient le mélange réactionnel ainsi formé à un pH basique;
c) on récupère le précipité formé par atomisation ou lyophilisation.

Dans la présente description, les caractéristiques de granulométrie font souvent référence à des notations du type dₙ où n est un nombre de 1 à 99, cette notation est bien connue dans de nombreux domaines techniques, mais est un peu plus rare en chimie, aussi peut-il être utile d'en rappeler la signification. Cette notation représente la taille de particule telle que n % (en masse) des particules soit inférieur ou égal à la dite taille.

La taille des particules de composé oxygéné du colloïde ci-dessus est telle que son d₉₀ soit d'au plus 20 nm (mesurée par METHR, c'est-à-dire par Microscopie Electronique par Transmission à Haute Résolution), plus particulièrement d'au plus 10 nm, de préférence d'au plus 5 nm (nanomètres). et en ce que sa teneur en nitrate soit d'au plus 1000 ppm.

Le procédé de préparation des particules de composé(s) mis sous la forme du sol selon la présente invention va tout d'abord être décrit.

La première étape [étape α)] du procédé consiste à préparer, habituellement sous forme d'une solution ou suspension, un mélange des éléments qui rentrent dans la composition du composé que l'on cherche à obtenir. Cette solution ou suspension comprend un sel soluble, le plus souvent un acétate et/ou un chlorure de terre rare et éventuellement au moins un sel ou un sol d'un autre élément choisi dans les groupes IVA, VIIA, VIII, IB, IIB, IIIB et IVB de la classification périodique des éléments. Pour la suite de la description de cette première étape et de l'étape suivante de mise en contact avec un milieu basique, on utilisera pour simplifier le terme mélange pour désigner la solution ou suspension de l'élément ou du mélange des éléments qui rentrent dans la composition du composé.

En ce qui concerne la terre rare, celle-ci peut être plus particulièrement choisie parmi le cérium, l'yttrium, le néodyme, le gadolinium, le praséodyme et le lanthane. Dans le cas de l'utilisation en catalyse des composés de l'invention, le cérium, le lanthane, le néodyme, l'yttrium et le praséodyme sont préférés. On peut également utiliser dans le cadre de cette invention un mélange constitué majoritairement de cérium et comprenant une proportion relativement faible [au plus égale à environ(dans la présente description le terme "environ" est employé pour mettre en exergue le fait que, lorsque le, ou les, chiffres les plus à droite d'un nombre sont des zéros, ces zéros sont des zéros de position et non des chiffres significatifs, sauf bien entendu s'il en est précisé autrement) 10%, plus généralement à 5 % en masse) d'éléments présentant d'autres valences et présents soit à titre de dopants, soit en tant qu'impuretés].

Pour l'autre élément, on peut mentionner plus particulièrement le zirconium, les éléments de transition présentant une sous couche d en cours de remplissage, notamment les élements de la colonne VIII (notamment ceux de la premère ligne existante), le cuivre, le manganèse.

En ce qui concerne les sels, on utilise de préférence l'acétate pour la ou les terres rares. Pour le ou les autres éléments, on peut mentionner comme sels les chlorures ou les sels d'acides carboxyliques comme les acétates, les oxalates ou les formiates. Lorsque cela est possible, on utilise de préférence un acétate.

L'étape suivante [étape β)] consiste à mettre en contact le mélange précité avec un milieu basique. Par milieu basique on entend tout milieu présentant un pH supérieur à 7. Le milieu basique sera habituellement une solution aqueuse contenant une base. On peut utiliser notamment comme base les produits du type hydroxyde. On peut citer les hydroxydes d'alcalins ou d'alcalino-terreux. On peut aussi utiliser les amines secondaires, tertiaires ou les hydroxydes d'ammoniums quaternaires. Toutefois, les amines et l'ammoniaque peuvent être préférés dans la mesure où ils diminuent les risques de pollution par les cations alcalins ou surtout alcalino-terreux. On peut aussi mentionner l'urée (dans les conditions où le diamide qu'est l'urée libère de l'ammoniaque).

Enfin, dans le cas de la préparation d'un composé à base de cérium et de zirconium utilisant un chlorure de cérium, on utilise tout particulièrement les bases mentionnées ci-dessus, on évite de préférence d'utiliser les carbonates ou hydroxycarbonates.

La mise en contact du mélange précité et du milieu basique se fait dans des conditions telles que le pH du mélange réactionnel que l'on forme ainsi reste basique.

De préférence, cette valeur de pH sera d'au moins 9. Elle pourra être plus particulièrement d'au plus 11. Plus particulièrement encore, cette valeur pourra être comprise entre 9,5 et 11.

La mise en contact [étape β)] du mélange précité et du milieu basique peut se faire par introduction du mélange dans le milieu basique. Il est aussi possible de réaliser la mise en contact en continu, la condition de pH étant réalisée en réglant les débits respectifs du mélange et du milieu basique.

Il est possible, selon une variante particulière de l'invention, de travailler dans des conditions telles que lors de la mise en contact du mélange avec le milieu basique on maintienne constant le pH du milieu réactionnel ainsi formé. De telles conditions peuvent être obtenues en ajoutant lors de l'introduction du mélange dans le milieu basique une quantité supplémentaire de base au mélange formé.

La mise en contact se fait habituellement à température ambiante.

A l'issue de la réaction, on obtient un précipité ou une suspension qui peut être séparé, si nécessaire, du mélange réactionnel par tout moyen connu. Le produit séparé peut être lavé.

Le séchage ultérieur [étape γ] ou, plus généralement la récupération du précipité peut notamment se faire par un procédé du type atomisation ou lyophilisation (le premier des deux est préféré).

Selon un mode de réalisation préféré de l'invention la séparation du précipité du mélange réactionnel et son séchage se fait par atomisation, c'est-à-dire par pulvérisation du mélange dans une atmosphère chaude (parfois désigné sous l'expression anglo-saxonne de "spray-drying"). L'atomisation peut être réalisée au moyen de tout pulvérisateur connu en soi, par exemple par une buse de pulvérisation du type pomme d'arrosoir ou autre. On peut également utiliser des atomiseurs dits à turbine. Sur les diverses techniques de pulvérisation susceptibles d'être mises en oeuvre dans le présent procédé, on pourra se référer notamment à l'ouvrage de base de MASTERS intitulé "SPRAY-DRYING" (deuxième édition, 1976, Editions Gerge Godwin - London).

On notera que l'on peut également mettre en oeuvre l'opération d'atomisation-séchage au moyen d'un réacteur "flash", par exemple du type mis au point par la Demanderesse et décrit notamment dans les demandes de brevet français n° 2 257 326, 2 419 754 et 2 431 321. Dans ce cas, les gaz traitants (gaz chauds) sont animés d'un mouvement hélicoïdal et s'écoulent dans un puits-tourbillon. Le mélange à sécher est injecté suivant une trajectoire confondue avec l'axe de symétrie des trajectoires hélicoïdales desdits gaz, ce qui permet de transférer parfaitement la quantité de mouvement des gaz au mélange à traiter. Les gaz assurent ainsi en fait une double fonction : d'une part la pulvérisation, c'est à dire la transformation en fines gouttelettes, du mélange initial, et d'autre part le séchage des gouttelettes obtenues. Par ailleurs, le temps de séjour extrêmement faible (généralement inférieur à 1/10 de seconde environ) des particules dans le réacteur présente pour avantage, entre autres, de limiter d'éventuels risques de surchauffe par suite d'un contact trop long avec les gaz chauds.

Selon les débits respectifs des gaz et du mélange à sécher, la température d'entrée des gaz est comprise entre 400 et 900°C et plus particulièrement entre 600 et 800°C, la température du solide séché entre 110 et 250°C, de préférence entre 125 et 200°C.

En ce qui concerne le réacteur flash mentionné plus haut, on pourra notamment se référer à la figure 1 de la demande de brevet français 2 431 321.

Celui-ci est constitué d'une chambre de combustion et d'une chambre de contact composée d'un bicône ou d'un cône tronqué dont la partie supérieure diverge. La chambre de combustion débouche dans la chambre de contact par un passage réduit.

La partie supérieure de la chambre de combustion est munie d'une ouverture permettant l'introduction de la phase combustible.

D'autre part la chambre de combustion comprend un cylindre interne coaxial, définissant ainsi à l'intérieur de celle-ci une zone centrale et une zone périphérique annulaire, présentant des perforations se situant pour la plupart vers la partie supérieure de l'appareil. La chambre comprend au minimum six perforations distribuées sur au moins un cercle, mais de préférence sur plusieurs cercles espacés axialement. La surface totale des perforations localisées dans la partie inférieure de la chambre peut être très faible, de l'ordre de 1/10 à 1/100 de la surface totale des perforations dudit cylindre interne coaxial.

Les perforations sont habituellement circulaires et présentent une épaisseur très faible. De préférence, le rapport du diamètre de celles-ci à l'épaisseur de la paroi est d'au moins 5, l'épaisseur minimale de la paroi étant seulement limitée par les impératifs mécaniques.

Enfin, un tuyau coudé débouche dans le passage réduit, dont l'extrémité s'ouvre dans l'axe de la zone centrale.

La phase gazeuse animée d'un mouvement hélicoïdal (par la suite appelée phase hélicoïdale) est composée d'un gaz, généralement de l'air, introduit dans un orifice pratiqué dans la zone annulaire, de préférence cet orifice est situé dans la partie inférieure de ladite zone.

Afin d'obtenir une phase hélicoïdale au niveau du passage réduit, la phase gazeuse est de préférence introduite à basse pression dans l'orifice précité, c'est-à-dire à une pression inférieure à 1 bar et plus particulièrement à une pression comprise entre 0,2 et 0,5 bar au dessus de la pression existant dans la chambre de contact. La vitesse de cette phase hélicoïdale est généralement comprise entre 10 et 100 m/s et de préférence entre 30 et 60 m/s.

Par ailleurs, une phase combustible qui peut être notamment du méthane, est injectée axialement par l'ouverture précitée dans la zone centrale à une vitesse d'environ 100 à 150 m/s.

La phase combustible est enflammée par tout moyen connu, dans la région où le combustible et la phase hélicoïdale sont en contact.

Par la suite, le passage imposé des gaz dans le passage réduit se fait suivant un ensemble de trajectoires confondues avec des familles de génératrices d'un hyperboloïde. Ces génératrices reposent sur une famille de cercles, d'anneaux de petite taille localisés près et au-dessous du passage réduit, avant de diverger dans toutes les directions.

On introduit ensuite le mélange à traiter sous forme de liquide par le tuyau précité. Le liquide est alors fractionné en une multitude de gouttes, chacune d'elles étant transportées par un volume de gaz et soumises à un mouvement créant un effet centrifuge. Habituellement, le débit du liquide est compris entre 0,03 et 10 m/s.

Le rapport entre la quantité de mouvement propre de la phase hélicoïdale et celle du mélange liquide doit être élevé. En particulier, il est d'au moins 100 et de préférence compris entre 1000 et 10000. Les quantités de mouvement au niveau du passage réduit sont calculées en fonction des débits d'entrée du gaz et du mélange à traiter, ainsi que de la section dudit passage. Une augmentation des débits entraîne un grossissement de la taille des gouttes.

Dans ces conditions, le mouvement propre des gaz est imposé dans sa direction et son intensité aux gouttes du mélange à traiter, séparées les unes des autres dans la zone de convergence des deux courants. La vitesse du mélange liquide est de plus réduite au minimum nécessaire pour obtenir un flot continu.

On obtient à l'issue de l'étape de séchage et/ou de séparation un composé selon l'invention qui va maintenant être décrit plus précisément.

Ce composé est à base d'oxyde ou d'oxyhydroxyde de terre rare et de l'autre élément et d'anions des précurseurs. Il peut aussi se présenter sous la forme d'un coeur à base d'au moins un oxyde ou d'un oxyhydroxyde de terre rare ou d'un oxyhydroxychlorure ou d'un oxyhydroxyacétate entouré d'anions du précurseur de la terre rare étant entendu que l'on peut avoir un oxyde ou oxyhydroxyde mixte de la terre rare et de l'autre élément. Par exemple, dans le cas particulier d'un composé à base de cérium et de zirconium préparé à partir d'acétate de cérium, on a un composé présentant un coeur à base d'au moins un oxyde et d'un oxyhydroxyde de cérium et de zirconium entouré d'anions acétate.

En ce qui concerne les proportions respectives des éléments rentrant dans la composition des composés issus de l'étape γ) selon l'invention, il est souhaitable que la proportion en terre rare soit d'au moins la moitié, avantageusement d'au moins les deux tiers, de préférence au moins les quatre cinquièmes en masse par rapport à l'ensemble des éléments exprimés en oxyde.

Une caractéristique essentielle des composés issus de l'étape γ) selon l'invention est leur dispersibilité dans l'eau. Cette dispersibilité dans l'eau est d'au moins 50%, plus particulièrement d'au moins 60% et d'au moins 80% dans le cas particulier de l'eau acidulée.

La dispersibilité est le rapport (P1 - P2)/P1 exprimée en %, P1 étant la masse initiale de produit mis en suspension dans l'eau et P2 la masse de précipité résiduel sec obtenu après centrifugation de la suspension préalablement obtenue, séparation des eaux-mères et du précipité et séchage de ce dernier. La dispersibilité dans l'eau acidulée est donnée de la même manière mais à partir d'une suspension dont le pH est de 4.

Une caractéristique intéressante des composés issus de l'étape γ) selon l'invention est aussi leur faible teneur en nitrate. Cette teneur en poids est d'au plus 1000 ppm, plus particulièrement d'au plus 200 ppm et encore plus particulièrement d'au plus 100 ppm.

Une autre caractéristique des composés issus de l'étape γ) selon l'invention est, dans le cas d'un mélange de sels, leur homogénéité chimique. En effet, les composés à base d'au moins une terre rare et d'au moins un autre élément choisi dans les groupes IVA, VIIA, VIII, IB, IIB, IIIB et IVB présentent une homogénéité chimique telle que les domaines d'hétérogénéité sont inférieurs à 10 nm². Ceci signifie qu'il n'y a pas de différence dans la composition chimique des produits de l'invention entre des zones de surface de 10nm².

Ces caractéristiques d'homogénéité sont déterminées par analyse MET-EDS. Plus particulièrement, le domaine d'hétérogénéité a été mesuré par la méthode de cartographie par spectroscopie à dispersion d'énergie (EDS) en utilisant une microsonde de microscopie électronique à transmission (MET).

La granulométrie des composés issus de l'étape γ) selon l'invention peut varier en fonction notamment du mode de séchage. Elle peut se situer entre 1 et 10 µm. Toutes les tailles données ici et dans la suite de la description sont des tailles moyennes.

L'intérêt principal des composés issus de l'étape γ) selon l'invention est leur capacité à donner des sols ou suspensions colloïdales aqueux. Ces sols aqueux vont maintenant être décrits plus particulièrement.

Ils sont obtenus en redispersant dans l'eau les composés décrits ci-dessus. Pour favoriser la dispersion des composés, il peut être avantageux de les disperser dans un milieu aqueux légèrement acidifié notamment avec de l'acide acétique et présentant par exemple un pH d'environ 4. On obtient ainsi des sols dont les principales caractéristiques sont les suivantes.

Ils sont constitués d'oxydes ou d'oxyhydroxydes de terres rares et d'au moins un autre élément métallique choisi dans les groupes IVA, VIIA, VIII, IB, IIB, IIIB et IVB. Ils présentent des colloïdes (ou particules) dont la taille est d'au plus 5 nm (nanomètres) et peut être comprise entre 2 et 5 nm dans le cas des produits à base seulement d'une ou plusieurs terres rares. Dans le cas de produits à base d'au moins une terre rare et d'un autre élément du type précité, la taille des colloïdes est d'au plus 10 nm et de préférence d'au plus 5 nm. Cette taille des colloïdes est mesurée par microscopie électronique à transmission (MET). En général, l'état d'oxydation des éléments métalliques ne changent pas durant la préparation des particules des sols aqueux et des sols organiques. Toutefois lors de l'opération d'atomisation, on ne peut exclure que les atomes superficiels (notamment le cérium, lorsque cet élément est utilisé) soient oxydés et passent à l'état d'oxydation supérieur.

Par ailleurs, la teneur en nitrate des sols, mesurée par rapport à la masse des colloïdes, est d'au plus 1000 ppm, plus particulièrement d'au plus 200 ppm et encore plus particulièrement d'au plus 100 ppm.

En outre, les colloïdes présentent une homogénéité chimique telle que les domaines d'hétérogénéité soient inférieurs à 10nm². Cette homogénéité chimique est mesurée comme précédemment (MET-EDAX).

Une autre caractéristique des sols aqueux de l'invention est leur caractère faiblement acide. Ils présentent en effet un pH d'au moins 3 et plus particulièrement compris entre 5 et 8.

La première étape a) du procédé de préparation du sol organique selon la présente invention va maintenant être décrite.

Les sols aqueux décrits ci-dessus constituent une bonne phase aqueuse comportant en dispersion au moins un composé oxygéné métallifère et conviennent très bien pour le transfert en phase organique. La concentration en matière solide de la phase aqueuse peut varier dans un large domaine : de 1 à 40 %, avantageusement de 5 à 30 %, de préférence de 10 à 20 % (% massique).

Plus généralement, afin de conduire de manière satisfaisante le procédé de l'invention, il est souhaitable que le sol aqueux de départ satisfasse aux exigences suivantes :
- le taux de métal sous forme d'un composé oxygéné métallifère colloïdal doit être très élevé, avantageusement 90 %, de préférence supérieur ou égal à 95 % et en règle générale aussi élevé que possible
- la concentration du sol aqueux en composé oxygéné métallifère colloïdal doit être suffisante et se situer de préférence entre 0,1 et 3 moles/litre,
- le sol aqueux doit présenter de bonnes propriétés de stabilité thermique et ne pas floculer à la température de réaction qui est supérieure à 60°C et varie le plus souvent entre 80°C et l'ébullition (variable selon la pression).

Selon une des caractéristiques particulièrement avantageuses de l'invention, il convient de veiller à ce que il n'y ait aucune particule trop grossière dans le sol aqueux et donc dans le sol final. Ainsi, il est préférable qu'au plus 5 %, avantageusement au plus 1 %, de préférence au plus 0,5 %, en masse des particules du sol aqueux aient une taille supérieure à 0,1 micromètre, avantageusement à 0,05 micromètre, de préférence à 0,02 micromètre.

L'élimination des particules les plus grossières peut se faire par toute technique permettant d'éliminer sélectivement les particules. Cette élimination peut se pratiquer sur le sol aqueux, sur le sol organique ou sur les deux.

Toutefois on préfère qu'il y ait au moins une séparation sur le sol aqueux. La technique préférée est la centrifugation.

Une centrifugation du sol aqueux correspondant à 1000 à 10 000 G pendant une heure donne en général de bons résultats. On peut toutefois aller jusqu'à des centrifugations correspondant à 50 000 G, la limite n'est qu'une limite d'ordre technologique.

Il est à noter que la centrifugation préalable à l'étape de constitution du sol organique, souvent appelée étape d'extraction, favorise cette dernière.

La teneur en métal du sol selon l'invention est avantageusement au plus égale 2/3 en masse de préférence entre environ 10 et 40 % (masse). Pour l'utilisation en additif pour diesel embarqué, il est préférable que la teneur ne descendent pas en dessous de 1/6 de préférence de 1/5.

Les sols organiques, selon la présente invention, sont en général préparés de manière connue par chauffage d'un sol aqueux contenant ledit composé oxygéné métallifère, en présence dudit diluant et dudit système acide amphiphile.

Lorsque le sol est réalisé à partir de plusieurs métaux, la répartition (en masse et topologique) entre les différents métaux du sol est celle du composé solide dispersé dans la phase aqueuse.

Toutefois, bien que dans le procédé de préparation du composé oxygéné métallifère, les terres rares soient à l'état d'oxydation le plus bas d'oxydation (III ou II dans le cas de l'europium), pour obtenir une bonne stabilité au stockage, il est préférable que la surface des particules soit, au moins partiellement au niveau d'oxydation le plus élevé quand il y en a plusieurs. Ainsi, lorsqu'un élement possède plusieurs états d'oxydation (en général le cérium), il est souhaitable qu'au moins la moitié, avantageusement les deux tiers, de préférence les trois quarts des atomes superficiels (sur une épaisseur de 3, avantageusement de 5 couches atomiques) de cet élément soit à l'état d'oxydation le plus élevé. Bien entendu la dite proportion peut être répartie dans la masse et non seulement dans la surface.

Le milieu liquide organique utilisé dans le procédé de l'invention peut être un hydrocarbure aliphatique ou cycloaliphatique inerte où leur mélange tel que par exemple des essences minérales où de pétrole, éthers minéraux ou de pétrole pouvant contenir également des composantes aromatiques. Les exemples comprennent l'hexane, l'heptane, l'octane, le nonane, le décane, le cyclohexane, le cyclopentane, le cycloheptane et les naphtènes liquides. Les solvants aromatiques tels que le benzène, le toluène, l'éthylbenzène et les xylènes conviennent également ainsi que les coupes pétrolières du type Solvesso et Isopar (marques déposées par la Société EXXON ) notamment le Solvesso100 qui contient essentiellement un mélange de méthyléthyl et triméthylbenzène, le Solvesso 150 qui renferme un mélange d'alcoylbenzènes en particulier de diméthyléthylbenzène et de tétraméthylbenzène et l'Isopar L [notice technique HDH C 388 (juillet 1981)] qui contient essentiellement des hydrocarbures iso- et cycloparaffiniques en C11 et C12.

On peut mettre en oeuvre également des hydrocarbures chlorés tels que le chloro- ou dichlorobenzène et le chlorotoluène aussi bien que des éthers aliphatiques et cycloaliphatiques tels que l'éther de diisopropyle, l'éther de dibutyle et les cétones aliphatiques et cycloaliphatiques telles que la méthylisobutylcétone, la diisobutylcétone, l'oxyde de mésityle.

Les esters peuvent être envisagés, mais ils présentent l'inconvénient de risquer d'être hydrolysés. On peut citer comme esters susceptibles d'être utilisés ceux issu des acides cités dans la présente demande avec des alcools en C1 à C8 et notamment les palmitates d'alcool secondaire tel l'isopropanol.

On choisira le liquide organique ou système solvant en tenant compte de l'acide organique solubilisant (agent amphiphile) utilisé, de la température de chauffage et de l'application finale de la solution ou dispersion colloïdale. Dans certains cas, il est préférable d'employer un mélange de solvants. La quantité de liquide ou solvant détermine évidemment la concentration finale. Il est plus économique et plus commode de préparer des dispersions plus concentrées qui pourront être diluées plus tard, lors de leur emploi. C'est pour cette raison que la quantité de solvant n'est pas critique.

Il peut être avantageux d'ajouter dans la phase organique un agent promoteur dont la fonction est d'accélérer le transfert des colloïdes de la phase aqueuse à la phase organique et d'améliorer la stabilité des sols organiques obtenus. A titre d'agents promoteurs, on peut utiliser les composés à fonction alcool et tout particulièrement des alcools aliphatiques linéaires ou ramifiés ayant de 6 à 12 atomes de carbone.

Comme exemples spécifiques, on peut citer l'éthyl-2 hexanol, le décanol, le dodécanol ou un mélange d'entre eux.

La proportion dudit agent dans la phase organique n'est pas critique et peut varier dans de larges limites.

Toutefois une proportion comprise entre 2 et 15 % en poids convient généralement bien.

Si le champ des acides utilisables est très vaste, le nombre total de carbone dans la molécule pour obtenir une bonne dissolution, est toutefois un peu plus contraignant. Le nombre total (moyen si l'acide utilisé est un mélange) de carbone des acides est avantageusement supérieur à 6 de préférence à 10, il est également souhaitable qu'il soit inférieur à environ 60.

Si l'on désire des concentrations élevées en terre rare, et notamment en cérium, ou équivalent il est souhaitable de choisir des acides aussi courts que possible.

Ces acides peuvent être linéaires ou ramifiés. Il est préférable toutefois que les ramifications soient, soit loin de la fonction carboxylique, soit peu nombreuses et portées par des carbones différents. Les acides carboxyliques utilisables pour la présente invention peuvent être des acides aryliques, aliphatiques ou arylaliphatiques. Ils peuvent porter d'autres fonctions à condition que ces fonctions soient stables dans les milieux où l'on désire utiliser les composés de terre(s) rare(s), et notamment de cérium, selon la présente invention.

Pour que le sol reste utilisable aux températures basses, en dessous de l'ambiante, voire en dessous de zéro degré centigrade, il est préférable que le point de fusion de l'acide, ou du mélange d'acides soit au plus égal à 50°C avantageusement à l'ambiante, de préférence à zéro degré centigrade.

Ainsi, on peut aisément utiliser des acides carboxyliques dont la chaîne carbonée porte des fonctions cétoniques comme les acides pyruviques substitués en alpha de la fonction cétone. Cela peut être également des acides alpha-halogéno carboxyliques ou des acides alpha-hydroxycarboxyliques.

La chaîne rattachée au groupe carboxylique peut porter des insaturations. Toutefois en général on tend à éviter de trop nombreuses doubles liaisons car le cérium, lorsque cet élément est utilisé, catalyse la réticulation des doubles liaisons. La chaîne peut être interrompue par des fonctions éther (éventuellement thioéther) ou ester à condition de ne pas trop altérer la lipophilicité de la chaîne porteuse du groupe carboxylique.

Ainsi on peut mettre en oeuvre des acides carboxyliques aliphatiques, des acides sulfoniques aliphatiques, des acides phosphoniques aliphatiques, des acides alcoylarylsulfoniques et des acides alcoylarylphosphoniques possédant environ de 10 à environ 40 atomes de carbone, qu'ils soient naturels ou synthétiques. On peut les utiliser seuls ou en mélange entre eux.

A titre d'exemples paradigmatiques, on peut citer les acides gras du tallol, d'huile de coco, de soja, de suif, d'huile de lin, l'acide oléique, l'acide linoléique, l'acide stéarique et ses isomères, l'acide, l'acide pélargonique, l'acide caprique, l'acide laurique, l'acide myristique, l'acide dodécylbenzènesulfonique, l'acide éthyl-2 hexanoïque, l'acide naphténique, l'acide hexoïque, l'acide toluène-suifonique, l'acide toluène-phosphonique, l'acide lauryl-sulfonique, l'acide lauryl-phosphonique, l'acide palmityl-sulfonique et l'acide palmityl-phosphonique. D'une manière préférentielle, on utilise l'acide oléique ou les acides alcoylarylsulfoniques.

La quantité d'acide organique amphiphile mise en oeuvre exprimée en nombre de moles d'acide par mole d'oxyde (lato sensu) peut varier dans de larges limites entre 1/10 et 1 mole par atome de terre rare. La borne supérieure ne présente pas de caractère critique mais il n'est pas nécessaire de mettre en jeu davantage d'acide. D'une manière préférentielle, l'acide organique est mis en oeuvre à raison de 1/5 à 4/5 mole par atome de terre rare.

Dans la phase organique, la proportion entre le solvant organique et l'acide organique n'est pas critique. Le rapport pondéral entre le solvant organique et l'acide organique est choisi, de préférence, entre 0,3 et 2,0.

L'ordre d'introduction des différents réactifs est indifférent. On peut effectuer le mélange simultané de la ou des dispersions aqueuses colloïdales, de l'acide organique, du solvant organique et éventuellement de l'agent promoteur. On peut également faire le prémélange de l'acide organique, du solvant organique et éventuellement de l'agent promoteur qui constituent la phase organique.

La température du milieu réactionnel est choisie préférentiellement dans un intervalle allant de 60°C à 150°C.

Dans certains cas, en raison de la volatilité du solvant organique, il y a lieu de condenser ses vapeurs par refroidissement à une température inférieure à son point d'ébullition.

Avantageusement, on travaille à une température comprise entre 60 et 120°C, de préférence entre 90 et 110°C.

On maintient le mélange réactionnel sous agitation pendant toute la durée du chauffage qui peut être de moins d'une heure à une journée environ, de préférence entre 2 heures et une demi-journée.

Au bout du temps de chauffage précité, on arrête le chauffage. On note la présence de deux phases : une phase organique contenant en dispersion, le complexe oxyde métallique - acide organique et une phase aqueuse résiduelle.

On sépare ensuite la phase organique et la phase aqueuse selon les techniques classiques de séparation : décantation, centrifugation, etc, ...

Conformément à la présente invention, on obtient des dispersions organiques colloïdales d'oxyde(s) métallique(s).

Pour certaines applications, il est possible d'utiliser le mélange réactionnel tel quel mais parfois il est souhaitable d'éliminer l'eau qui peut représenter de 1 à 3 % en poids de la phase organique. A cet effet, on met en oeuvre les moyens bien connus par l'homme de l'art, par exemple passage sur agent de dessiccation (y compris un filtre à membrane hydrophobe) ou l'adjonction d'un tiers solvant inerte par rapport au composé de Mⁿ⁺, ayant un point d'ébullition, de préférence, inférieur à 100°C et formant un azéotrope avec l'eau puis distillation de l'azéotrope obtenu. A titre de tiers solvants convenant à l'invention, on peut citer les hydrocarbures aliphatiques, tels que l'hexane, l'heptane, les hydrocarbures cycloaliphatiques : aromatiques, ou les alcools tels que par exemple, éthanol, éthylène glycol, diéthylène glycol, etc...

Il est préférable, notamment pour les applications comme adjuvant du gazole que la teneur en eau soit au plus égale à 1 %, avantageusement à 1 pour mille, de préférence à 100 ppm.

Le domaine préféré est de 15 à 25 atomes de carbone pour les acides dudit système amphiphile.

Lorsque le système est un mélange d'acides le nombre de carbones peut être fractionnaire puisqu'il s'agit alors d'une moyenne et les contraintes sur la moyenne sont avantageusement les mêmes que celles ci-dessus pour l'un des, ou le, constituant(s) dudit système amphiphile. La contrainte minimale est que la moyenne des atomes de carbone des acides dudit système amphiphile soit au moins égale à 10 atomes de carbone. Plus spécifiquement la moyenne des atomes de carbone des acides dudit système amphiphile est avantageusement de 11 à 25, de préférence de 15 à 25.

Pour obtenir de meilleurs résultats, surtout quand la longueur de chaîne est faible (inférieure à 14 atomes de carbone), lorsque la ramification est unique et surtout lorsqu'elle est située en position gamma ou delta de l'atome porteur de l'hydrogène acide, il est très souhaitable que cette ramification soit d'au moins deux atomes de carbone, avantageusement trois. Pour expliciter la nomenclature des positions on trouvera ci-après les exemples du phosphate acide de di éthyl-2 hexyle HO-P(C8H17)-0-CH2-CH(C2H5)-CH2(C3H7) et de l'acide éthyl-2 octanoique HO-CO-CH(C2H5)-CH2-CH2CH2(C3H7)

| (fonction porteuse du proton H⁺) | position de l'atome (susceptible d'être porteur de la ramification) | | | | reste de la molécule |
|---|---|---|---|---|---|
| | alpha | bêta | gamma | delta | |
| HO | -P(C8H17) | -0 | -CH2 | -CH(C2H5) | -CH2(C3H7) |
| HO | -CO | -CH(C2H5) | -CH2 | -CH2 | CH2(C3H7) |

On préfère que la partie linéaire la plus longue soit d'au moins 6, de préférence 8 carbones. Il est également avantageux que la ou les chaîne(s) latérale(s) des acides ramifiés comportent au moins deux atomes, de préférence trois atomes de carbone.

Il est avantageux que le pKa d'au moins un des acides soit au plus égal à 5, de préférence à 4,5.

Il est préférable, notamment lorsque les acides sont des acides carboxyliques, que le système d'acide amphiphile soit un mélange d'acides.

Dans ce cas les conditions sur la ramification doivent jouer sur au moins la moitié, avantageusement le deux tiers, de préférence les quatre cinquièmes en mole des acides constitutifs dudit système d'acide(s) amphiphile(s).

Parmi les acides donnant de très bons résultats, on peut citer les acides contenant du phosphore, comme les acides phosphoriques, notamment les diesters de l'acide phosphorique, les acides phosphoniques, et leurs mono esters, et les acides phosphiniques.

Parmi les acides carboxyliques donnant de bons résultats, il convient de citer les acides constitutifs du mélange d'acides connu sous le nom d'acide isostéarique. Le système d'acide est avantageusement l'acide isostéarique lui-même.

Le point de fusion commençante du système d'acide(s) amphiphile(s) est avantageusement inférieur à 50°C, plus avantageusement inférieur ou égal à 20°C, de préférence au plus égal à 0°C.

Pour une bonne stabilité et pour une bonne extraction, il est souhaitable que le rapport molaire entre l'extractant et le métal tétravalent, de préférence le cérium, soit compris entre 0,1 et 0,6, de préférence entre 0,2 et 0,4. Ce rapport croît quand la taille des particules décroît.

Pour obtenir des sols particulièrement stables, comme il a été montré que la présence de particules grossières nuisait à la stabilité à long terme des sols selon la présente invention, ou même des sols réalisés à partir d'acides plus classiques, il est préférable qu'au plus 5 %, avantageusement au plus 1 %, de préférence au plus 0,5 % en masse des particules d'oxyde, soit au plus égal à 0,1 micromètre, avantageusement à 0,05 micromètre, de préférence à 0,02 micromètre.

Tout diluant conduisant à un sol stable entre dans le cadre de cette invention.

Les sols selon la présente invention peuvent être utilisés selon de nombreuses mises en oeuvre. Selon la mise en oeuvre désirée, il convient de choisir un compromis en tenant compte des données techniques ci-après; pour la synthèse, voire la stabilité il est souhaitable d'éviter les hydrocarbures très apolaires, comme par exemple les hydrocarbures aliphatiques non cycliques. Les diluants, tels les ester ou éthers, présentant une fonction polaires donnent de bons résultats, mais pour certains usages peuvent être à éviter dans la mesure du possible. le mélange de diluants peut apporter une solution en compensant la non polarité de certains diluants par l'adjonction de composés polaires, en général des solvants.

Selon une mise en oeuvre particulièrement avantageuse de la présente invention, le sol est utilisé pour former un sol dilué dans un gazole. Le sol initial est en général très concentré, ce qui limite la latitude de l'homme de métier. Par ailleurs, pour des raisons de compatibilité avec le gazole, et ses nombreux additifs, les diluants sont alors de préférence peu polaires. Comme éléments constitutifs d'un diluant, les composés aromatiques ou aliphatiques sont préférables aux composés présentant une fonction polaire, tel que par exemple les fonctions ester ou éther.

Il est préférable que les diluants aient un indice de Kauri Butanol (mesuré selon la norme ASTM D II 33) inférieur à 105, avantageusement inférieur à 90.

Pour l'utilisation en tant qu'additif embarqué, il est préférable que le point de fusion des diluants, ou mélanges de diluants, soient bas et répondent aux contraintes de point de fusion décrites dans le présent titre à propos du système d'acide amphiphile.

Il est également préférable que ces diluants présentent une solubilité dans l'eau très faible, de préférence inférieure à 5 % en masse, de préférence au plus à 1 %, plus préférentiellement au plus égale à 0,5 % en masse.

De manière symétrique, il est également préférable que l'eau soit soluble à au plus 5 %, de préférence au plus à 1 %, plus préférentiellement au plus à 0,5 % dans le diluant.

Parmi les diluants préférés, il convient de citer les composés hydrocarbonés aromatiques et leurs mélanges, ainsi que les composés aliphatiques et leurs mélanges contenant moins de 50 %, de préférence 25 % ou plus préférentiellement 1 % de composés aromatiques.

La teneur en métal du sol organique selon l'invention est avantageusement au plus égale 2/3 en masse de préférence entre 30 et 40% (masse). Pour l'utilisation en additif pour diesel embarqué, il est préférable que la teneur ne descende pas en dessous de 1/6 de préférence de 1/5.

Les sols organiques, selon la présente invention, sont en général préparés de manière connue par chauffage d'un sol aqueux contenant le dit oxyde métallique, en présence dudit diluant et dudit système acide amphiphile.

Selon une des caractéristiques particulièrement avantageuses de l'invention, il convient de veiller à ce que il n'y ait aucune particule trop grossière dans le sol aqueux et donc dans le sol final.

L'élimination des particules de tailles les plus grossières peut se faire par toute technique permettant d'éliminer sélectivement les particules les plus grossières. Cette élimination peut se pratiquer sur le sol aqueux, sur le sol organique ou sur les deux.

Toutefois, on préfère qu'il y ait au moins une séparation sur le sol aqueux. La technique préférée est la centrifugation.

Une centrifugation du sol aqueux correspondant à 1000 à 10 000 G pendant une heure donne en général de bons résultats. On peut toutefois aller jusqu'à des centrifugations correspondant à 50 000 G, la limite n'est qu'une limite d'ordre technologique.

Il est à noter que la centrifugation préalable à l'étape de constitution du sol organique, souvent appelée étape d'extraction, favorise cette dernière.

On constate que le rendement d'extraction du cérium dans la phase organique est très bon puisqu'il peut atteindre 90 à 95 %.

Par diffusion quasi élastique de la lumière, on met en évidence la présence de colloïdes dont diamètre hydrodynamique est inférieure à 100 Ä (10nm) (c'est à dire voisin de la limite de détection des appareils actuels les plus courrants). Les données obtenues montrent que le d₅₀ est compris entre environ 10 Ä (1nm) et 100 Ä (10nm). le d₉₀ est au plus égal à 200 Ä (20nm).

Les sols organiques ainsi élaborés présentent une excellente stabilité. On n'observe pas de décantation au bout de plusieurs mois.

Les sols selon la présente invention dont la partie oxyde métallique présente une proportion notable (environ au moins 1/10, avantageusement 1/4, de préférence 1/2 en équivalent d'oxyde) d'éléments métalliques dont l'hydroxyde ne précipite qu'à des pH assez élevé (pH au moins égal à environ 4, avantageusement à environ 5 pour une solution10⁻² M) se sont révélés difficiles à obtenir par d'autres voies que celle décrite dans la présente demande. Ces éléments métalliques (ou métaux), sont notamment les terres rares n'ayant qu'une seule valence ainsi que les métaux de transition dont la valence la plus élevée est divalente.

Selon une des caractéristiques préférées de la présente invention, le sol est tel que, ajusté à une concentration en cérium métal contenu de 30 %, la viscosité du sol à 25 °C est au plus égale à 20 mPa.S, avantageusement à 15 mPa.S, de préférence à 10 mPa.S.

Il est également préférable que les contre anions de la solution de cérium source du sol, ne soient plus présents dans les divers sols selon la présente invention qu'à une teneur au plus égale à 0,1, avantageusement à 0,05, de préférence à 0,03 équivalents par 100 grammes de bioxyde de cérium. Cette contrainte est surtout valable pour la couche superficielle des cristallites.

Cette viscosité peut-être mesurée par "low shear" de marque Contraves en faisant varier le gradient de vitesse de 0,01 à 1.

Les sols organiques ainsi obtenus peuvent être dilués pour obtenir des concentrations de 10 à 500 de préférence de 50 à 200 ppm. Le diluant est avantageusement un carburant pour moteur à combustion interne de préférence diesel; l'invention vise donc aussi des sols dont la phase organique est essentiellement constituée de gazole et de ses additifs.

L'invention concerne également l'utilisation des sols organiques préparés selon l'invention comme siccatifs dans l'industrie des peintures et vernis en vue d'accélérer le séchage des huiles insaturées. Les sols selon l'invention peuvent également être utilisés en cosmétique.

Une des applications les plus intéressantes, concerne l'utilisation de ces sols organiques en tant qu'adjuvants de combustion dans les carburants liquides des générateurs énergétiques tels que moteurs à explosion, brûleurs à mazout ou propulseurs à réaction.

En ce qui concerne l'application au gazole, les meilleurs résultats sont obtenus avec des gazoles dont 95 % en masse des constituants distillent sous pression atmosphérique à une température au moins égale à 160°C avantageusement à 180°C et dont 95 % en masse des constituants sont volatils sous pression atmosphérique à 400°C de préférence à 360°C.

Le procédé donne d'aussi bons résultats avec les gazoles à teneur élevée en aromatique, qu'avec les gazoles à teneur élevée en aliphatique avec la condition que les contraintes de distillation exposées ci-dessus soient observées.

Ainsi la présente invention est particulièrement intéressante pour deux sortes de carburant ceux dont la teneur en aromatique est très élevée [teneur en dérivé(s) aromatique(s) est au moins égal à 1/5 avantageusement à un tiers], car elle permet d'utiliser ces carburants qui sans cette invention conduirait à des dépôts par trop perturbants.

Par ailleurs, c'est sur les carburants (c'est-à-dire lesdits mélanges) dits paraffiniques dont la teneur en paraffine est au moins égale à 30 % que les effets sont les plus nets. Ces carburants sont étudiés en vue de répondre à de nouvelles normes plus contraignantes. II est souhaitable que pour ce type de composition, la teneur en aromatiques (en masse) soit au plus égale à 1/5 avantageusement à 1/10, de préférence à 1/20. La présence de l'adjuvant selon la présente invention, dilué au sein du carburant, notamment pour moteur diesel (gazole), avantageusement à hauteur de 10 à 200 ppm en masse, de préférence 20 à 100 ppm a pour effet d'entraîner une réduction de la consommation en carburant et de l'émission primaire de suies ainsi qu'une diminution de la température d'autoinflammation des suies. Cette dernière propriété est mise en évidence dans les exemples suivants où elle est évaluée de façon quantitative soit au niveau du laboratoire, soit au niveau d'un banc moteur.

Au niveau du laboratoire, on procède de la manière suivante :

Un noir de carbone dont on sait qu'il peut être produit de manière reproductive (réf ELFTEX 125 N° 137 de chez CABOT) a été sélectionné pour ces propriétés en terme de taille de particule et de surface spécifique. Celles-ci respectivement de 60 nm et 30 m²/g sont du même ordre de grandeur que les particules carbonées émises en sortie d'un échappement de moteur diesel. Ce noir de carbone est imprégné par de l'additif de manière à obtenir une teneur finale de 15% en poids de Ce. Cette teneur est représentative de ce qui peut être obtenu dans les particules émises à l'échappement d'un moteur diesel, lors de la mise en oeuvre d'un additif dans du gazole. L'imprégnation est réalisée de la même manière que l'on prépare les catalyseurs supportés par la technique dite d'imprégnation à sec. Du noir de carbone et la quantité voulue d'additif sont intimement mélangés dans un récipient en verre jusqu'à l'obtention d'une pâte homogène. Ensuite, l'ensemble est séché une nuit à 95 °C. Le suivi en Analyse Thermo Gravimétrique (ATG) de la combustion dans l'air de ce noir de carbone imprégné permet de mettre en évidence le plus ou moins grand effet catalytique ainsi généré par la présence de l'additif. L'additif sera considéré comme d'autant plus actif que la température correspondante de début de combustion du carbone durant l'ATG sera basse. Un essai réalisé avec le noir de carbone non imprégné d'additif sert de référence. L'ATG est réalisée avec une charge de 20 à 25 mg de noir de carbone, dans un débit d'air de 3,5 Nl/h et avec une programmation de température entre la température ambiante et 900 °C à raison de 10 °C/mn.

Au niveau du banc moteur, on procède de la manière suivante :

Un moteur Daimler-Benz 240 D diesel de 2,4 I de cylindré, atmosphérique avec boîte manuelle est placé sur un banc dynamométrique. La ligne d'échappement est équipée d'un filtre à particule (CORNING EX-47 5,66" x 6,00") en céramique. La température des gaz d'échappement est mesurée à l'entrée du filtre à particules grâce à des themocouples. La pression différentielle entre l'entrée et la sortie du filtre à particules est mesurée également. L'additif est ajouté au carburant de manière à réaliser un dosage à 100 ppm de métal par rapport au carburant additivé.

Le filtre à particules est chargé en particules grâce à la réalisation de 3 cycles consécutifs correspondant au cycle FTP 75 américain. Ensuite le régime moteur est fixé de manière à correspondre à une vitesse de 90 km/h sur le quatrième rapport. On augmente alors la charge à régime moteur constant pour provoquer l'élévation de température des gaz d'échappement. La perte de charge créee par le filtre à particules augmente dans un premier temps du fait de l'augmentation de température puis elle atteint un maximum avant de redescendre du fait de la combustion des matériaux carbonés accumulés dans le filtre à particules. On considère le point (repéré par sa température) à partir duquel la perte de charge n'augmente plus comme le point de régénération de l'additif corespondant. Comme précédemment, un essai réalisé en l'absence d'additif dans le carburant fixe la valeur de référence.

Les exemples non limitatifs suivants illustrent l'invention.

### Mode opératoire commun

Dans ces exemples, la dispersibilité dans l'eau est mesurée de la manière suivante : on introduit 1g de produit sec dans une fiole jaugée de 50ml, on complète en eau à 50ml et on agite pendant 15 minutes. La suspension obtenue est centrifugée à 4500t/mn pendant 10mn. Les eaux-mères sont ensuite séparées du précipité qui est séché à 120°C pendant une nuit. La dispersibilité est donnée par le rapport (P1 - P2)/P1 exprimée en %, P1 étant la masse initiale de 1g et P2 la masse de précipité résiduel sec. La dispersibilité dans l'eau acidulée est déterminée en utilisant le même mode opératoire mais la suspension de 50 ml est amenée à pH 4 avec de l'acide acétique concentré.

Enfin, la mesure par diffusion quasi élastique de la lumière permet de prouver la présence de colloïdes dans les eaux-mères.

Sous l'expression de "terres rares" on entend les éléments dont le numéro atomique est compris entre 57 et 71 (lanthanides y compris le lanthane) ainsi que le scandium et l'yttrium.

### Exemple 1 comparatif: sol organique de cérium

On place 0,51 d'une solution 3,6M de NH₄OH dans un réacteur à température ambiante avec une forte agitation (1600tr/mn). On introduit à l'aide d'un goutte à goutte rapide 0,51 d'une solution 0,6M d'acétate de cérium. Le pH passe de 11,5 à 9,5 dès le début de l'introduction de l'acétate de cérium III. On maintient 30 mn l'agitation après l'introduction de tout l'acétate. La température reste au niveau de la température ambiante. On sépare ensuite le précipité obtenu par filtration sur fritté n°4. Le précipité est ensuite lavé par lavage piston avec 21 d'eau déminéralisée.

Le précipité est séché par lyophilisation en 24h ou par atomisation avec un atomiseur Büchi. Dans ce dernier cas, la température de sortie du solide est de 110°C.

L'analyse MET montre que le composé obtenu présente une taille moyenne de cristallites élémentaires de 2,5nm. La teneur en nitrate est de 80ppm.

Le composé présente une dispersibilité dans l'eau de 95%.

Le composé redispersé dans l'eau déminéralisée donne un sol dont le pH est de 5 et dont la taille des colloïdes est de 4nm.

15 g d'oxyde de cérium sous forme d'hydrate atomisé sont repris dans 100 ml d'eau de façon à obtenir un sol aqueux de concentration 150 g/l. Pour former 100g de sol organique, 14,8 g d'oléïne sont dilués dans 70,2 g de Solvesso 150 (coupe pétrolière aromatique) de façon à obtenir un rapport molaire oleïne/Ce de 0,6 et une concentration finale en CeO₂ dans la phase organique de 15%.

La phase organique est mise en contact avec la phase aqueuse sous faible agitation (100tr/min) puis le mélange est porté à reflux (100-103 °C) pendant 4 heures. Après décantation la phase organique chargée en cérium est filtrée sur filtre hydrophobe puis éventuellement centrifugée à 4500 tr/min. Le sol obtenu de concentration 10,4 % est constitué de particules monodisperses de 9 à 10 nm. Il est parfaitement stable à l'échelle de plusieurs semaines.

### Exemple 2 : sol organique Ce/Fe

Cet exemple concerne la préparation d'un composé cérium - fer dans les proportions respective de 90/10 en poids d'oxyde.

On part d'une solution d'acétate de fer obtenue à partir de nitrate de fer par précipitation à l'ammoniaque à pH 7 puis lavage du précipité et resolubilisation dans l'acide acétique à pH 1,5. On forme un mélange d'acétate de cérium et de fer en solution à 70g/l dans le rapport d'oxydes 90/10. On fait réagir en continu cette dernière solution avec une solution d'ammoniaque 4M. Les débits respectifs de solution et d'ammoniaque sont de 24ml/mn et de 26ml/mn. Le pH du milieu réactionnel est de 11. Le précipité obtenu est séché avec un atomiseur Büchi dans les mêmes conditions que dans l'exemple 1.

Le produit présente une dispersibilité dans l'eau de 65%.

L'analyse MET-EDS montre une hétérogénéité inférieure à 10nm².

20 g d'oxyde Ce/Fe (90/10 en poids d'oxyde) sous forme d'hydrate atomisé sont repris dans 200 ml d'eau de façon à obtenir un sol aqueux de 100 g/l. Pour former 100 g de sol organique, 10 g d'acide isostéarique sont dilués dans 70 g de Solvesso 150 de façon à obtenir un rapport molaire acide isostéarique/oxyde de 0,3 et une concentration finale en oxyde mixte dans la phase organique de 20%.

On procède comme dans l'exemple précédent pour effectuer la reprise en phase organique. Le sol organique obtenu, de concentration 19 % massique en oxyde mixte, présente une couleur noire limpide avec des reflets orangés. Il est parfaitement stable.

### Exemple 3 : sol organique Ce/La

Cet exemple concerne la préparation d'un composé cérium/lanthane dans les proportions respectives en poids d'oxyde de 80/20.

On prépare une solution comprenant par litre 135,2g d'acétate de cérium et 35,1g d'acétate de lanthane.

On fait réagir cette solution en continu avec un débit de 18ml/mn avec une solution d'ammoniaque 4M au débit de 26ml/mn. On sèche avec un atomiseur Büchi toujours dans les mêmes conditions.

Le composé obtenu présente une teneur en nitrate de 70ppm et une dispersibilité dans l'eau de 60%. L'analyse MET-EDS du produit montre une hétérogénéité inférieure à 10nm².

20 g d'oxyde Ce/La (80/20 en poids d'oxyde) sous forme d'hydrate atomisé sont repris dans 200 ml d'eau de façon à obtenir un sol aqueux de 100 g/l. Pour former 100 g de sol organique, 9 g d'acide isostéarique sont dilués dans 71 g de Solvesso 150 de façon à obtenir un rapport molaire acide isostéarique/oxyde de 0,3 et une concentration finale en oxyde mixte dans la phase organique de 20%.

On procède comme dans l'exemple 1 pour effectuer la reprise en phase organique. Le sol organique obtenu, de concentration 11,2% massique en oxyde mixte, présente une couleur noire. Il est parfaitement stable.

### Exemple 4 : sol organique Ce/Mn

Cet exemple concerne un composé cérium/zirconium de proportions respectives en poids d'oxydes 82/18.

On prépare une solution de chlorure de cérium et de zirconyle dans les proportions requises. On fait réagir en continu et sous une agitation de 700tr/mn cette solution avec une solution d'ammoniaque 4M avec les débits respectifs de 20 et 11ml/m. Le pH du milieu réactionnel est de 10,1. Le précipité obtenu est séché avec un atomiseur Büchi toujours dans les mêmes conditions. Le composé présente une dispersibilité dans l'eau acidulée de 51%. L'analyse MET-EDS du produit montre une hétérogénéité inférieure à 10nm².

30 g d'oxyde Ce/Mn (90/10 en poids d'oxyde) sous forme d'hydrate atomisé sont repris dans 200 ml d'eau de façon à obtenir un sol aqueux de 150 g/l. Pour former 100 g de sol organique, 10,6 g d'oléine sont dilués dans 59,4 g de Solvesso 150 de façon à obtenir un rapport molaire oléine/oxyde de 0,2 et une concentration finale en oxyde mixte dans la phase organique de 30%.

On procède comme dans l'exemple 1 pour effectuer la reprise en phase organique. Le sol organique obtenu est parfaitement stable.

### Exemple 5 : sol organique Ce/Cu

Cet exemple concerne la préparation d'un composé cérium/cuivre dans les proportions respectives en poids d'oxydes de 90/10.

On prépare une solution d'acétates de cérium et de cuivre dans les proportions nécessaires. On fait réagir en continu cette solution avec une solution de soude 2M dans les débits respectifs de 18l/mn et de 26l/mn

Le composé obtenu est séché avec un atomiseur Bûchi toujours dans les mêmes conditions. L'analyse MET-EDS du produit montre une hétérogénéité inférieure à 10nm².

30 g d'oxyde Ce/Cu (90/10 en poids d'oxyde) sous forme d'hydrate atomisé sont repris dans 200 ml d'eau de façon à obtenir un sol aqueux de 150 g/l. Pour former 100 g de sol organique, 16,5 g d'oléïne sont dilués dans 46,5 g de Solvesso 150 de façon à obtenir un rapport molaire oléïne/oxyde de 0,3 et une concentration finale en oxyde mixte dans la phase organique de 30%.

On procède comme dans l'exemple 1 pour effectuer la reprise en phase organique. Le sol organique obtenu présente une couleur noire limpide avec des reflets bleus. Il est stable à l'échelle de plusieures semaines.

Pour certains des exemples précedents les températures d'inflammation ou de régénération (mesurées selon les méthodes qui ont été décrites plus haut) sont rassemblées dans les deux tableaux suivants

| **Résultats par ATG** | |
|---|---|
| **Additifs** | **T inflammation (°C)** |
| sans | 580 |
| Ce (exemple 1) | 305 |
| CeMn (exemple 4) | 255 |
| CeCu (exemple 5) | 230 |

Les résultats obtenus montrent sans ambiguité que la température d'inflammation des suies est abaissée de façon significative lorsque les particules de carbone sont imprégnées par un sol organique de la présente invention.

| **Résultats sur banc moteur** | |
|---|---|
| **Additifs** | **T régénération (°C)** |
| sans | 600 |
| Ce (exemple 1) | 566 |
| CeMn (exemple 4) | 550 |
| CeCu (exemple 5) | 512 |

Les résultats obtenus sur banc moteur montrent que la température de régénération d'un filtre à particules est abaissée de façon significative lorsque les particules accumulées ont été générées à partir d'un carburant additivé par un sol organique de la présente invention.

## Revendications

1. Procédé de préparation d'un sol organique comportant au moins un composé oxygéné métallifère à base d'au moins une terre rare et d'au moins un autre élément métallique choisi dans les groupes IVa, Vlla, VIII, Ib, IIb, IIIb et IVb de la classification périodique des éléments, **caractérisé par le fait qu'**il comporte les étapes suivantes :
a) préparer, une phase aqueuse comportant en dispersion au moins un composé oxygéné métallifère à base d'au moins une terre rare et d'au moins un autre élément métallique choisi dans les groupes IVa, VIIa, VIII, Ib, IIb, IIIb et IVb de la classification périodique des éléments ;
b) mettre en contact, simultanément ou consécutivement, une suspension issue de l'étape (a) avec une phase organique comprenant au moins un agent amphiphile et de préférence un composé ou un mélange organique jouant le rôle de solvant ;
c) récupérer la phase organique ;
et **par le fait que** ledit composé oxygéné métallifère est obtenu par un procédé comportant les étapes ci-après :
α) on prépare une solution comprenant au moins un acétate et/ou un chlorure de terre rare et un sel et/ou un sol de l'élément métallique ;
β) on met en contact la solution avec un milieu basique et on maintient le mélange réactionnel ainsi formé à un pH basique ;
γ) on récupère le précipité formé par atomisation ou lyophilisation.

2. Procédé selon la revendication 1, **caractérisé par le fait que** la terre rare est choisie parmi le cérium, l'yttrium, le néodyme, le gadolinium, le praséodyme et le lanthane.

3. Procédé selon les revendications 1 et 2, **caractérisé par le fait que** l'autre composé métallique est un élément choisi parmi le zirconium, le fer, le cuivre, le gallium, le palladium et le manganèse.

4. Procédé selon les revendications 1 à 3, **caractérisé par le fait que** l'on maintient constant le pH du milieu réactionnel lors de la mise en contact de la solution avec le milieu basique.

5. Procédé selon les revendications 1 à 4, **caractérisé par le fait que** l'on réalise la mise en contact précitée en introduisant la solution dans le milieu basique.

6. Procédé selon les revendications 1 à 5, **caractérisé par le fait que** l'on utilise comme milieu basique une solution d'ammoniaque.

7. Procédé selon les revendications 1 à 6, **caractérisé par le fait que** l'on maintient le pH du milieu réactionnel à une valeur d'au moins 9 et plus particulièrement comprise entre 9,5 et 11.

8. Sol organique comportant :
- des particules de composé oxygéné métallifère à base d'au moins une terre rare et d'au moins un autre élément métallique choisi dans les groupes IVa, VIIa, VIII, Ib, llb, Illb et IVb de la classification périodique des éléments,
- un système d'acide amphiphile,
- un diluant,
et **caractérisé par le fait que** les particules de composé oxygéné métallifère sont susceptibles d'être obtenues par un procédé comportant les étapes ci-après :
a) on prépare une solution comprenant au moins un acétate et/ou un chlorure, de terre rare et un sel et/ou un sol de l'élément métallique ;
b) on met en contact la solution avec un milieu basique et on maintient le mélange réactionnel ainsi formé à un pH basique ;
c) on récupère le précipité formé par atomisation ou lyophilisation.

9. Sol selon la revendication 8, **caractérisé par le fait que** le rapport molaire entre ledit acide amphiphile et les éléments métalliques du sol est au plus égal à 0,5.

10. Sol selon les revendications 8 et 9, **caractérisé par le fait que** le ou les chaînes latérales des acides du système d'acide amphiphile présentant au moins une ramification, comportent au moins 2 atomes de carbone, de préférence au moins 3.

11. Sol selon les revendications 8 à 10, **caractérisé par le fait que** ledit système d'acide amphiphile contient de l'acide isostéarique.

12. Sol selon les revendications 8 à 11, **caractérisé par le fait que** ledit système acide amphiphile est un diester de l'acide phosphorique.

13. Sol selon les revendications 8 à 12, **caractérisé par le fait que** le point de fusion commençante du système acide amphiphile est au plus égal à 50°C, avantageusement à 20°C, de préférence à 0°C.

14. Sol selon les revendications 8 à 13, **caractérisé par le fait qu'**au plus 5 %, avantageusement au plus 1 %, de préférence au plus 0,5 % en masse des particules d'oxyde, soit au plus égal à 0,1 micromètre, avantageusement à 0,05 micromètre, de préférence à 0,02 micromètre.

15. Sol selon les revendications 8 à 14, **caractérisé par le fait qu'**il est à base de cérium et de fer ou de cérium et de cuivre.

16. Carburant pour moteur à combustion interne, **caractérisé par le fait qu'**il est obtenu par mélange à un carburant usuel d'un sol selon l'une des revendications 8 à 15.

17. Utilisation des sols selon les revendications 8 à 15 comme adjuvant de gazole pour moteur diesel.

## Patentansprüche

1. Verfahren zur Herstellung eines organischen Sols, das wenigstens eine oxygenierte metallische Verbindung auf der Grundlage wenigstens eines Seltenerdelements und wenigstens eines anderen metallischen Elements, das ausgewählt wird aus den Gruppen IVa, VIIa, VIII, Ib, IIb, IIIb und IVb des Periodensystems der Elemente umfasst, **dadurch gekennzeichnet, dass** dieses die folgenden Schritte umfasst:
a) Herstellen einer wässrigen Phase, welche wenigstens eine oxygenierte metallische Verbindung auf der Grundlage wenigstens eines Seltenerdelements und wenigstens eines anderen metallischen Elements, das ausgewählt wird aus den Gruppen IVa, VIIa, VIII, Ib, IIb, IIIb und IVb des Periodensystems der Elemente, in einer Dispersion umfasst;
b) Inkontaktbringen, gleichzeitig oder nacheinander, einer Suspension, die aus Schritt (a) stammt, mit einer organischen Phase, die wenigstens ein amphiphiles Mittel und vorzugsweise eine organische Verbindung oder Mischung umfasst, welche als das Lösungsmittel fungiert;
c) Gewinnen der organischen Phase;
und dadurch, dass die oxygenierte metallische Verbindung durch ein Verfahren erhalten wird, welches die nachfolgenden Schritte umfasst:
α) man stellt eine Lösung her, die wenigstens ein Acetat und/oder ein Chlorid des Seltenerdelements und ein Salz und/oder ein Sol des metallischen Elements umfasst;
β) man bringt die Lösung mit einem basischen Medium in Kontakt und man hält die so gebildete Reaktionsmischung bei einem basischen pH;
γ) man gewinnt den gebildeten Niederschlag durch Atomisierung oder Lyophilisierung.

2. Verfahren nach Anspruch 1, **dadurch gekennzeichnet, dass** das Seltenerdelement ausgewählt wird aus Cer, Yttrium, Neodym, Gadolinium, Praseodym und Lanthan.

3. Verfahren nach den Ansprüchen 1 und 2, **dadurch gekennzeichnet, dass** die andere metallische Verbindung ein Element ist, das ausgewählt wird aus Zirkonium, Eisen, Kupfer, Gallium, Palladium und Mangan.

4. Verfahren nach den Ansprüchen 1 bis 3, **dadurch gekennzeichnet, dass** man den pH des Reaktionsmediums konstant hält, wenn man die Lösung mit dem basischen Medium in Kontakt bringt.

5. Verfahren nach den Ansprüchen 1 bis 4, **dadurch gekennzeichnet, dass** man das oben erwähnte Inkontaktbringen realisiert, indem man die Lösung in das basische Medium einführt.

6. Verfahren nach den Ansprüchen 1 bis 5, **dadurch gekennzeichnet, dass** man als basisches Medium eine Ammoniaklösung verwendet.

7. Verfahren nach den Ansprüchen 1 bis 6, **dadurch gekennzeichnet, dass** man den pH des Reaktionsmediums bei einem Wert von wenigstens 9 und vorzugsweise zwischen 9,5 und 11 hält.

8. Organisches Sol, umfassend:
- Teilchen der oxygenierten metallischen Verbindung auf der Grundlage wenigstens eines Seltenerdelements und wenigstens eines anderen metallischen Elements, das ausgewählt ist aus den Gruppen IVa, VIIa, VIII, Ib, IIb, IIIb und IVb des Periodensystems der Elemente,
- ein amphiphiles Säuresystem,
- ein Verdünnungsmittel,
und **dadurch gekennzeichnet, dass** die Teilchen der oxygenierten metallischen Verbindung durch ein Verfahren erhalten werden können, welches die nachfolgenden Schritte umfasst:
a) man stellt eine Lösung her, welche wenigstens ein Acetat und/oder ein Chlorid des Seltenerdelements und ein Salz und/oder ein Sol des metallischen Elements umfasst;
b) man bringt die Lösung mit einem basischen Medium in Kontakt und man hält die so gebildete Reaktionsmischung bei einem basischen pH;
c) man gewinnt den gebildeten Niederschlag durch Atomisierung oder Lyophilisierung.

9. Sol nach Anspruch 8, **dadurch gekennzeichnet, dass** das Molverhältnis zwischen der amphiphilen Säure und den metallischen Elementen des Sols höchstens gleich 0,5 ist.

10. Sol nach den Ansprüchen 8 und 9, **dadurch gekennzeichnet, dass** die Seitenkette oder die Seitenketten der Säuren des amphiphilen Säuresystems, die wenigstens eine Verzweigung aurweisen, wenigstens 2, vorzugsweise wenigstens 3 Kohlenstoffatome umfassen.

11. Sol nach den Ansprüchen 8 bis 10, **dadurch gekennzeichnet, dass** das amphiphile Säuresystem Isostearinsäure enthält.

12. Sol nach den Ansprüchen 8 bis 11, **dadurch gekennzeichnet, dass** das amphiphile Säuresystem ein Diester der Phosphorsäure ist.

13. Sol nach den Ansprüchen 8 bis 12, **dadurch gekennzeichnet, dass** der Anfangsschmelzpunkt des amphiphilen Säuresystems höchstens gleich 50°C, vorzugsweise 20°C und besonders bevorzugt 0°C ist.

14. Sol nach den Ansprüchen 8 bis 13, **dadurch gekennzeichnet, dass** höchstens 5 %, vorzugsweise höchstens 1 %, besonders bevorzugt höchstens 0,5 %, bezogen auf das Gewicht, der Oxidteilchen höchstens eine Größe gleich 0,1 Mikrometer, vorzugsweise 0,05 Mikrometer und besonders bevorzugt 0,02 Mikrometer aufweisen.

15. Sol nach den Ansprüchen 8 bis 14, **dadurch gekennzeichnet, dass** es auf Cer und auf Eisen oder auf Cer und auf Kupfer basiert.

16. Treibstoff für einen Verbrennungsmotor, **dadurch gekennzeichnet, dass** dieser durch Mischen eines üblichen Treibstoffes mit einem Sol nach einem der Ansprüche 8 bis 15 erhalten wird.

17. Verwendung der Sole nach den Ansprüchen 8 bis 15 als Zusatz für Dieseltreibstoffe für Dieselmotoren.

## Claims

1. A process for preparing an organic sol comprising at least one metalliferous oxygen-containing compound based on at least one rare earth and at least one other metallic element selected from groups IVa, VIIa, VIII, Ib, IIb, IIIb and IVb of the periodic table, **characterized in that** it comprises the following steps:
a) preparing an aqueous phase comprising, in dispersion, at least one metalliferous oxygen-containing compound based on at least one rare earth and at least one other metallic element selected from groups IVa, VIIa, VIII, Ib, IIb, IIIb and IVb of the periodic table;
b) bringing a suspension formed from step a) into contact, simultaneously or consecutively, with an organic phase comprising at least one amphiphilic agent and preferably an organic mixture or compound acting as a solvent;
c) recovering the organic phase;
and **in that** said metalliferous oxygen-containing compound is obtained by a process comprising the following steps:
α) preparing a solution comprising at least one rare earth acetate and/or chloride and a salt and/or a sol of a metallic element;
β) bringing the solution into contact with a basic medium and keeping the reaction mixture formed at a basic pH;
γ) recovering the precipitate formed by spray drying or freeze drying.

2. A process according to claim 1, **characterized in that** the rare earth is selected from cerium, yttrium, neodymium, gadolinium, praseodymium and lanthanum.

3. A process according to claim 1 or claim 2, **characterized in that** the other metallic compound is an element selected from zirconium, iron, copper, gallium, palladium and manganese.

4. A process according to claims I to 3, **characterized in that** the pH of the reaction medium is kept constant during contact of the solution with the basic medium.

5. A process according to claims 1 to 4, **characterized in that** said contact is accomplished by introducing the solution into the basic medium.

6. A process according to claims 1 to 5, **characterized in that** an ammonia solution is employed as the basic solution.

7. A process according to claims 1 to 6, **characterized in that** the pH of the reaction medium is kept to at least 9 and more particularly in the range 9.5 to 11.

8. An organic sol comprising:
• particles of a metalliferous oxygen-containing compound based on at least one rare earth and at least one other metallic element selected from groups IVa, VIIa, VIII, Ib, IIb, IIIb and IVb of the periodic table;
• an amphiphilic acid system;
• a diluent;
and **characterized in that** the particles of the metalliferous oxygen-containing compound are capable of being obtained by a process comprising the following steps:
a) preparing a solution comprising at least one rare earth acetate and/or chloride and a salt and/or a sol of a metallic element;
b) bringing the solution into contact with a basic medium and keeping the reaction mixture formed at a basic pH;
c) recovering the precipitate formed by spray drying or freeze drying.

9. A sol according to claim 8, **characterized in that** the mole ratio between said amphiphilic acid and the metallic elements of the sol is at most 0.5.

10. A sol according to claims 8 or claim 9, **characterized in that** the side chain or chains of the acids of the amphiphilic acid system having least one branch contain at least 2 carbon atoms, preferably at least 3.

11. A sol according to claims 8 to 10, **characterized in that** said amphiphilic acid system contains isostearic acid.

12. A sol according to claims 8 to 11, **characterized in that** said amphiphilic acid system is a phosphoric acid diester.

13. A sol according to claims 8 to 12, **characterized in that** the starting melting point of the amphiphilic acid system is at most 50°C, advantageously 20°C, preferably 0°C.

14. A sol according to claims 8 to 13, **characterized in that** at most 5%, advantageously at most 1%, preferably at most 0.5% by weight of the oxide particles, are at most 0.1 micrometers, advantageously 0.05 micrometers, preferably 0.02 micrometres.

15. A sol according to claims 8 to 14, **characterized in that** it is based on cerium and iron or cerium and copper.

16. A fuel for an internal combustion engine, **characterized in that** it is obtained by mixing a sol according to one of claims 8 to 15 with a usual fuel.

17. Use of sols according to claims 8 to 15 as a gas oil additive for a diesel engine.
